# EUROPÄISCHE PATENTANMELDUNG

(11) **EP 0 829 998 A2**
(43) Veröffentlichungstag der Anmeldung: **18.03.1998**
(21) Anmeldenummer: 97115647.6
(22) Anmeldetag: 09.09.1997
(51) Int. Cl.: H04M 19/00

(54) **Teilnehmerschaltung**

(30) Priorität: 11.09.1996 DE 19636954
(71) Anmelder: SIEMENS AKTIENGESELLSCHAFT, 80333 München (DE)
(72) Erfinder: Moyal, Michael, 9500 Villach (AT); Zojer, Herbert, 9500 Villach (AT); Zojer, Bernhard, 9500 Villach (AT); Dielacher, Franz, 9500 Villach (AT); Riedle, Ulrich, 83620 Feldkirchen-Westerham (DE)

(57) **Zusammenfassung**

Die Erfindung betrifft eine Teilnehmerschaltung, bei der mehrere SLIC-Schaltungen (2, 3, 4, 5) in einer Mehrfach-SLIC zusammengefaßt sind. Die hochenergetischen Bauteile jeder SLIC-Schaltung (2, 3, 4, 5) sind als Einzelbauelemente (30, 31, 36, 37) in Standardform ausgeführt. Zur Beseitigung von Nichtlinearitäten sind die Einzelbauelemente (30, 31, 36, 37) über die jeweils zugeordnete SLIC-Schaltung rückgekoppelt.

## Beschreibung

Die vorliegende Erfindung betrifft eine Teilnehmerschaltung, bei der mehrere SLIC-Schaltungen in einem Mehrfach-SLIC zusammengefaßt sind. Ein SLIC ist eine Speiseschaltung für ein analoges Telefon, die ein Endgerät speist und einen Ruf an- und abschaltet. SLIC ist die Abkürzung für "Subscriber Line Inter Circuit".

Bei bestehenden Teilnehmerschaltungen ist jeweils in einem Vermittlungsamt einem Teilnehmer ein SLIC zugeordnet und mit diesem über eine a-Ader (Tip) sowie eine b-Ader (Ring) verbunden. Eine Teilnehmerschaltung in dem Vermittlungsamt enthält mehrere SLICs sowie gemeinsam für die SLICs eine Batterie und einen Rufsignalgenerator. Jeder SLIC liefert mit Hilfe des Rufsignalgenerators für den ihm zugeordneten Teilnehmer über die a-Ader bzw. die b-Ader ein Rufwechselsignal.

Bisher ist also jedem Teilnehmer ein SLIC zugeordnet, der alle für seine Funktion, also die Lieferung des Rufwechselsignales, notwendigen hochenergetischen und niederenergetischen Bauelemente enthält. Die hochenergetischen Bauelemente sind dabei insbesondere Relais, die die Rufwechselsignale auf der a-Ader bzw. b-Ader an- und abschalten.

Die Zuordnung eines SLICs zu jedem Teilnehmer bedeutet einen beträchtlichen Aufwand, der außerdem mit einem relativ großen Platzbedarf verknüpft ist, welcher durch die Relais bedingt ist. Dieser Aufwand und dieser Platzbedarf könnten erheblich verringert werden, wenn einem "Mehrfach"-SLIC die Betreuung von mehreren Teilnehmern zugewiesen werden könnte, so daß ein solcher Mehrfach-SLIC mehrere Teilnehmer, beispielsweise vier Teilnehmer, mit den Rufwechselsignalen versorgt.

Es ist also **Aufgabe** der vorliegenden Erfindung, eine Teilnehmerschaltung zu schaffen, bei der der Aufwand für SLIC-Schaltungen dadurch herabgesetzt ist, daß ein Mehrfach-SLIC mehreren Teilnehmern zugeordnet werden kann.

Zur Lösung dieser Aufgabe sieht die vorliegende Erfindung eine Teilnehmerschaltung mit den Merkmalen des Patentanspruches 1 vor.

Bei der vorliegenden Erfindung ist also der bisherige SLIC in seine niederenergetischen Bauteile und seine hochenergetischen Bauteile aufgeteilt. Die niederenergetischen Bauteile von mehreren SLICs sind zu einem Baustein, einem sogenannten "Mehrfach"-SLIC zusammengefaßt. Die hochenergetischen Bauteile sind für jeden einzelnen SLIC getrennt ausgeführt und außerhalb des SLICs realisiert. Wesentlich ist dabei, daß für diese hochenergetischen Bauteile Standardbauteile für den Hochvoltsektor, wie beispielsweise SIPMOS-Transistoren oder Leistungs- bzw. MOS-Transistoren, eingesetzt werden.

Bei dieser Aufteilung der Bauteile in hochenergetische Bauteile und niederenergetische Bauteile unter Verwendung von Standardbauteilen für die hochenergetischen Bauteile wäre an sich nachteilhaft, daß die hochenergetischen Bauteile, die als Einzelelemente ausgeführt sind, in ihrem Betriebsverhalten nicht linear sind, was zu einem Rauschen bei der Übertragung von Sprechsignalen führt. Um nun diese Nichtlinearität zu beseitigen, sind bei der erfindungsgemäßen Teilnehmerschaltung die die hochenergetischen Bauteile bildenden Einzelbauelemente über den ihnen jeweils zugeordneten SLIC rückgekoppelt. Durch diese Rückkopplung wird die gewünschte Linearität erreicht.

Die Einzelbauelemente umfassen in vorteilhafter Weise einen Schalter und einen Transistor, dem eine Diode vorgespannt ist. Die Relais des bestehenden SLICs werden also bei der erfindungsgemäßen Teilnehmerschaltung durch Schalter und Transistoren mit Dioden ersetzt. Die Schalter sind dabei in bevorzugter Weise optische Schalter.

Soll die Teilnehmerschaltung so geschaltet werden, daß bei ihr eine Polaritätsumkehr der jeweils an der a-Ader bzw. der b-Ader liegenden Signale möglich ist, so werden die Einzelbauelemente in einer Brückenschaltung verdoppelt und kreuzgekoppelt angeordnet.

Nachfolgend wird die Erfindung anhand der Zeichnungen näher erläutert. Es zeigen:
- Fig. 1: ein Prinzipschaltbild zur Erläuterung der erfindungsgemäßen Teilnehmerschaltung mit vier SLICs, d.h. einem sogenannten Quad-SLIC;
- Fig. 2: ein Blockschaltbild der erfindungsgemäßen Teilnehmerschaltung, und
- Fig. 3: eine Schaltungsanordnung zur Polaritätsumkehr.

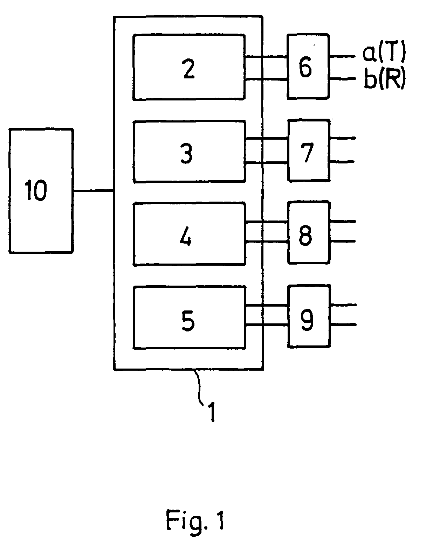

Fig. 1 zeigt einen sogenannten Quad-SLIC 1 mit vier SLICs 2, 3, 4 und 5, denen jeweils ein hochenergetischer Teil 6, 7, 8, 9 nachgeschaltet ist. Von diesen hochenergetischen Teilen 6, 7, 8, 9 gehen jeweils Adern a (bzw. T = Tip) und b (bzw. R = Ring) zu den einzelnen Teilnehmern ab. Der Quad-SLIC 1 wird durch einen gemeinsamen digitalen Signalprozessor 10 gesteuert.

Wesentlich an der vorliegenden Erfindung ist zunächst, daß die hochenergetischen Teile 6, 7, 8, 9 nicht in den einzelnen SLICs enthalten sind, sondern vielmehr getrennt von diesen angeordnet werden. Dadurch ist es aber möglich, die vier SLICs 2, 3, 4, 5 in einem "Quad-SLIC" 1 zu integrieren.

Für die hochenergetischen Teile 6, 7, 8, 9 werden Einzelbauelelemente, wie optische Schalter und Standardtransistoren, eingesetzt, wobei zur Linearisierung der Standardtransistoren eine Rückkopplung über den jeweiligen zugeordneten SLIC vorgenommen wird.

Durch die Integration in einem Quad-SLIC, von dem vier Kanäle für die vier Teilnehmer abgehen, und die gemeinsame Ansteuerung durch den einen digitalen Signalprozessor 10 kann eine Reduzierung der benötigten Fläche erreicht werden, was noch dadurch verstärkt wird, daß der Flächenbedarf für die optischen Schalter und die Standardtransistoren kleiner ist als derjenige für die statt dessen bisher vorgesehenen Relais.

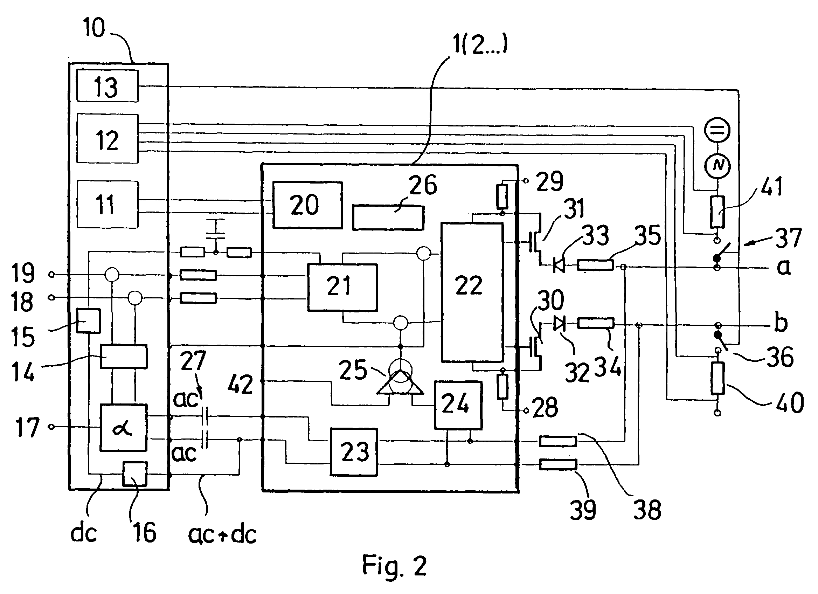

Fig. 2 zeigt ein Blockschaltbild der erfindungsgemäßen Teilnehmerschaltung. Der digitale Signalprozessor 10 enthält insbesondere eine Signaleinheit 11, die einem Teilnehmer meldet, was mit der Leitung (a, b) geschieht, eine Rufüberwachungseinheit 12 und eine Läut-Steuereinheit 13, die dafür sorgt, daß der Telefonapparat bei einem Teilnehmer nicht weiter läutet, wenn dieser den Hörer abgehoben hat. Weiterhin sein Einheiten 14 und 15 für den Wechselspannungsabschluß bzw. die Gleichstrom-Speisecharakteristik vorgesehen. Ein Tiefpaßfilter 16 filtert aus Wechselstrom- und Gleichstromanteilen ac + dc die Gleichstromanteile dc aus. Leitungen 17, 18 und 19 führen zum Vermittlungsamt.

Weiterhin zeigt die Fig. 2 den Quad-SLIC 1, wobei zur Vereinfachung der zeichnerischen Darstellung in Fig. 2 nur ein SLIC, also beispielsweise der SLIC 2 gezeigt ist. Tatsächlich ist dieser SLIC 2 mit den weiteren SLICs 3, 4 und 5 zu dem Quad-SLIC 1 integriert.

Im Quad-SLIC 1 ist mit der Signaleinheit 11 eine Steuereinheit 20 verbunden. Die Einheiten 14 und 15 des digitalen Signalprozessors sind über Widerstände an einen 1:1-Konverter 21 angeschlossen, dem eine Ansteuereinheit Driver 22 nachgeschaltet ist. Weiterhin sind eine Einheit 23, die die hier zugeführten Spannungen VT und VR voneinander subtrahiert und das Ergebnis durch einen Faktor α dividiert, sowie eine Einheit 24, die die ihr zugeführten Spannungen VT und VR addiert und die Summe durch zwei dividiert, ein Vergleicher 25 und eine Bezugs- bzw. Vorspannungsversorgung 26 vorgesehen. Die Einheit 23 liefert die Wechselstrom- und Gleichstromkomponenten ac + dc zu dem Tiefpaßfilter 16 und über Kondensatoren 27 Wechselstromkomponenten ac zu dem α-Glied. Zwischen Anschlüssen 28 und 29 liegt eine Gleichstrombatterie, die beispielsweise eine Spannung von -48 V abgibt. Dabei liegt der Anschluß 28 auf Masse.

Der Ansteuereinheit 22 sind Leistungstransistoren, wie beispielsweise SIPMOS-Transistoren 30, 31 vorgeschaltet, welche mit Dioden 32, 33 verbunden sind, die über Sicherungswiderstände 34, 35 an die Adern a bzw. b angeschlossen sind. Diese Adern a bzw. b sind über optische Schalter 36, 37 mit der Rufüberwachungseinheit 12 bzw. der Läut-Steuereinheit 13 verbunden.

Bei der erfindungsgemäßen Teilnehmerschaltung sind also die hochenergetischen Bauteile, nämlich die SIPMOS-Transistoren 30, 31 und die Schalter 36, 37 aus dem Quad-SLIC 1 herausgenommen und getrennt angeordnet. Für diese Bauteile 30, 31, 36, 37 werden Standardbauelemente eingesetzt.

Die Funktionen der bisher verwendeten Relais werden so von den SIPMOS-Transistoren 30, 31 und den optischen Schaltern 36, 37 übernommen. Dabei dienen die optischen Schalter 36, 37 zum Einschalten, während die SIPMOS-Transistoren 30, 31 die Abschaltfunktionen der Relais übernehmen.

Die Adern a und b sind außerdem über Schutzwiderstände 38, 39 mit der Einheit 23 bzw. der Einheit 24 verbunden. Außerdem liegen Widerstände 40, 41 zwischen den Schaltern 36, 37 und der Rufüberwachungseinheit 12.

Die Standardbauelemente, die für die SIPMOS-Transistoren 30, 31 verwendet werden, haben nichtlineare Kennlinien. Eine solche Nichtlinearität ist aber unerwünscht und ruft in den übertragenen Sprechsignalen Rauschen hervor. Um diese Nachteile der Nichtlinearität zu überwinden, erfolgt bei der erfindungsgemäßen Teilnehmerschaltung eine Rückkopplung der Gleichstromkomponenten dc und der Wechselstromkomponenten ac über die Einheit 23, das α-Glied (ac) bzw. die Einheit 15 (dc) und den Konverter 21 zu der Ansteuereinheit 22. Außerdem wird in dem Vergleicher 25 die an einem Anschluß 42 zugeführte Regelgröße, beispielsweise die halbe Batteriespannung, mit der von der Einheit 24 gelieferten Spannung verglichen und das Ergebnis der Ansteuereinheit 22 zugeführt. Diese steuert abhängig von der ihr eingespeisten Signalen die Gates der SIPMOS-Transistoren 30, 31 an, so daß diese linear arbeiten.

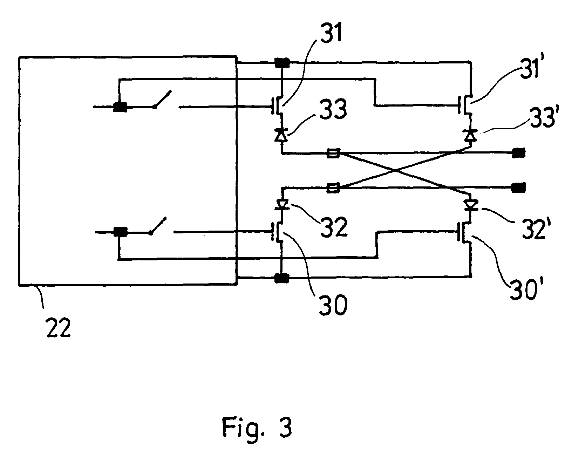

Die Fig. 3 zeigt eine Schaltungsanordnung zur Polaritätsumkehr der Adern a und b. Dabei werden in Fig. 3 die gleichen Bezugszeichen wie in Fig. 2 verwendet, wahrend die für die Brückenschaltung in Kreuzkopplung doppelt vorgesehenen Bauteile mit einem Strich versehen sind. In der Fig. 3 gezeigte Schalter sind alle tatsächlich in die Ansteuereinheit 22 integriert.

## Patentansprüche

1. Teilnehmerschaltung, bei der mehrere SLIC-Schaltungen (2, 3, 4, 5) in einem Mehrfach-SLIC (1) zusammenfaßt sind,
dadurch gekennzeichnet,
- daß die hochenergetischen Bauteile (30, 31, 36, 37) jeder SLIC-Schaltung (2, 3, 4, 5) als Einzelbauelemente ausgeführt sind,
- daß die SLIC-Schaltungen (2, 3, 4, 5) in dem Mehrfach-SLIC (1) integriert sind,
- die Einzelbauelemente (30, 31, 36, 37) über die jeweils zugeordnete SLIC-Schaltung (2, 3, 4, 5) rückgekoppelt sind.

2. Teilnehmerschaltung nach Anspruch 1,
dadurch gekennzeichnet,
daß die Einzelbauelemente einen optischen Schalter (36, 37) und einen Transistor (30, 31), dem eine Diode (32, 33) vorgeschaltet ist, umfassen.

3. Teilnehmerschaltung nach Anspruch 2,
dadurch gekennzeichnet,
daß der Transistor ein SIPMOS-Transistor oder ein Leistungstransistor ist.

4. Teilnehmerschaltung nach einem der Ansprüche 1 bis 3,
dadurch gekennzeichnet,
daß die Rückkopplung der Einzelbauelemente über einen Wechselstrompfad und einen Gleichstrompfad erfolgt.

5. Teilnehmerschaltung nach einem der Ansprüche 1 bis 3,
dadurch gekennzeichnet,
daß für eine Polaritätsumkehr die Einzelbauelemente in einer Brückenschaltung verdoppelt und kreuzgekoppelt angeordnet sind.
